Europäisches Patentamt

European Patent Office

Office européen des brevets

(11) Veröffentlichungsnummer : **0 079 618**
**B1**

# (12) EUROPÄISCHE PATENTSCHRIFT

(45) Veröffentlichungstag der Patentschrift :
17.08.88

(51) Int. Cl.⁴ : **G 06 F 13/24**

(21) Anmeldenummer : 82110601.0

(22) Anmeldetag : 16.11.82

(54) Verfahren und Anordnung zur überwachten Übergabe von Steuersignalen an Schnittstellen digitaler Systeme.

(30) Priorität : 17.11.81 DE 3145632

(43) Veröffentlichungstag der Anmeldung :
25.05.83 Patentblatt 83/21

(45) Bekanntmachung des Hinweises auf die Patenterteilung : 17.08.88 Patentblatt 88/33

(84) Benannte Vertragsstaaten :
AT DE FR GB IT

(56) Entgegenhaltungen :
FR-A- 2 071 920
ELECTRONICS, Band 44, Nr. 25, 6. Dezember 1971,
Seite 76, NEW YORK, (US). D.J. PLUMMER et al.:
"Interrupt register secures all data signals".
ELEKTRONIK, Band 29, Nr. 26, Dezember 1980, Seite
50, MÜNCHEN, (DE). T. GRIES: "Einfache Interrupt-
Schaltung für Z80-Systeme".

(73) Patentinhaber : Siemens Aktiengesellschaft Berlin
und München
Wittelsbacherplatz 2
D-8000 München 2 (DE)

(72) Erfinder : Geiger, Gerhard, Dipl.-Ing.
Hohenwaldeckstrasse 7
D-8162 Schliersee (DE)
Erfinder : Strafner, Michael, Dipl.-Ing.
St. Cajetanstrasse 14
D-8000 München 80 (DE)

## Beschreibung

Die Erfindung betrifft ein Verfahren und eine Anordnung zur überwachten Übergabe von Steuersignalen an Schnittstellen digitaler Systeme nach dem Oberbegriff des Patentanspruchs 1, bzw. 2.

In Mikrocomputersystemen übernehmen periphere Geräte mit Kontrolleinheit Aufgaben der Datenaufbereitung und Datenformatierung und entlasten damit die Zentraleinheit. Diese Aufgaben umfassen z. B. Serien/Parallelwandlung von Daten, Codewandlung und/oder Handling von Datenprotokollen. In der Regel ist die Schnittstelle zwischen dem peripheren Gerät mit Kontrolleinheit und der Zentraleinheit mittels Steuersignalen, meist mittels « Interrupt »-Signalen gesteuert. Im peripheren Gerät wird ein Ereignis, d. h. eine Interrupt-Ursache detektiert und der Zentraleinheit über eine « Interrupt-Request »-Leitung gemeldet.

In komplexeren peripheren Geräten mit Kontrolleinheit kann das Steuersignal, in der Regel also der « Interrupt-Request » durch mehrere Quellen ausgelöst werden, wie z. B. « Datenbereit », « Datenüberlauf », « Datenübertragungsfehler » usw. Die Zentraleinheit liest in diesem Fall nach dem Empfang eines « Interrupt-Requests » ein im peripheren Baustein angeordnetes Statusregister, aus dem sie die Interrupt-Ursache entnimmt, und bestätigt damit den Empfang des Interrupt-Requests. Im peripheren Gerät mit Kontrolleinheit wird der Status in die Ausgangslage rückgesetzt. Als entsprechend arbeitende periphere Geräte mit Kontrolleinheit sind z. B. der programmierbare Floppy-Disk-Controller 8271 aus Intel, Comp. Data Catalog, January 1981, insbesondere Seiten 8-115 bis 8-118, und der programmierbare HDLC/SDLC Protocol Controller 8273 aus Intel, Component Data Catalog, January 1981, insbesondere Seiten 8-163 bis 8-175 bekannt.

Aus « Electronics », Band 44, Nr. 25, 6. Dezember 1971, Seite 76, « Interrupt Register Secures all Data Signals » ist eine Schnittstelle bekannt, bei der die Ausgänge eines ersten Statusregisters mit den Eingängen eines zweiten Statusregisters über steuerbare Verbindungsglieder verbunden sind. Ein Steuersignal setzt nacheinander beide Statusregister und das zweite Statusregister erzeugt ein Anforderungssignal für die Zentraleinheit und setzt gleichzeitig das erste Statusregister zurück. Anschließend liest die Zentraleinheit den Inhalt des zweiten Statusregisters aus und setzt es zurück. Während eines Lese- und Rücksetzvorgangs des zweiten Statusregisters wird die Verbindung zwischen den beiden Statusregistern mit Hilfe einer von der Zentraleinheit bei Lesebereitschaft angesteuerten monostabilen Kippstufe unterbrochen. Um fehlerfrei zu arbeiten, muß die Dauer eines Steuersignals für das erste Statusregister länger als die Unterbrechungszeit zwischen beiden Statusregistern sein.

Da aus Gründen der Technologie und der bausteininternen Struktur die Zentraleinheit und der periphere Baustein mit Kontrolleinheit oft mit unterschiedlichen Taktfrequenzen betrieben werden, da anderenfalls der langsamere Baustein die Verarbeitungsgeschwindigkeit begrenzen würde, ergeben sich dabei die für eine Informationsübergabe an asynchronen Taktgrenzen typischen Probleme :

Ein Interrupt-Ereignis tritt synchron zum Takt des peripheren Gerätes (Taktsystem 1) auf, setzt synchron zu diesem Takt die Statusregister und löst damit den Interrupt-Request aus. Die Reaktion der Zentraleinheit, das Lesen des zweiten Statusregisters, läuft synchron zum Takt der Zentraleinheit (Taktsystem 2). Anschließend wird das zweite Statusregister wieder rückgesetzt. Damit liegt zwischen dem Auslesen des zweiten Statusregisters und dem Rückstzen in jedem Fall eine endliche Zeit. Somit können Interrupt-Ereignisse, die in diese Zeitspanne fallen, von der Zentraleinheit nicht ausgewertet werden.

Aufgabe der Erfindung ist es, hier Abhilfe zu schaffen und ein Verfahren und eine Anordnung zur überwachten Übergabe von Steuersignalen an Schnittstellen digitaler, mit asynchronen Takten arbeitender Systeme vorzusehen, bei dem eine Nichtbearbeitung von Steuersignalen, wie z. B. Interrupt-Ereignissen durch eine Zentraleinheit verhindert wird.

Diese Aufgabe wird bei einem Verfahren und einer Anordnung der eingangs genannten Art erfindungsgemäß durch die Merkmale der kennzeichnenden Teile der Patentansprüche 1 und 2 gelöst.

Durch die Gestaltung der Timing-Schnittstelle zwischen den beiden digitalen Systemen mit einem Zwischenspeicher und mit einer durch eine Überwachungslogik gesteuerten Trennung der Speicherelemente an dieser Schnittstelle und durch Überwachung der an der Timing-Schnittstelle von erstem System (Taktsystem 1) an das zweite System (Taktsystem 2) übergebenen Steuerinformation und davon abhängigen individuellen Rücksetzen nur der ausgewerteten Interrupt-Ereignisse gelingt es, eine Nichtbearbeitung von Steuerinformationen bzw. Interrupt-Ereignissen durch das zweite System zu vermeiden.

Es liegt im Rahmen der Erfindung, daß das erste Statusregister aus n RS-Flip-Flops aufgebaut ist und daß das zweite Statusregister aus n D-Flip-Flops aufgebaut ist, die eingangsseitig während der Aktivphase eines aus der Überwachungslogik übernommenen Übernahmesignals mit den Ausgängen des ersten Statusregisters verbindbar sind.

Es liegt weiterhin im Rahmen der Erfindung, daß die Überwachungslogik ein erstes, vom Takt des ersten Systems getaktetes Flip-Flop aufweist, dessen Setzeingang vom Lesesignal des zweiten Systems beaufschlagbar ist, und an dessen erstem Ausgang das Übernahmesignal entnehmbar ist, daß die Überwachungslogik ein vom Takt des ersten Systems getaktetes Flip-Flop aufweist, dessen Setzeingang mit dem Ausgang eines Dreifach-NOR-Gatters, von dem je ein Eingang mit dem Setzeingang des ersten Flip-Flop, dem ersten Ausgang des ersten Flip-Flops und dem zweiten Ausgang des zweiten Flip-Flops verbunden ist, verbunden ist und dessen erstem Ausgang ein Rücksetzimpuls entnehmbar ist, und daß die Überwachungslogik für jede der n Zellen des ersten Statusregisters ein Zweifach-NOR-Gatter aufweist, dessen erster Eingang mit dem Rücksetzimpuls beaufschlagt ist, dessen zweiter Eingang mit dem Ausgang der entsprechenden Zelle des zweiten Statusregisters verbunden ist und dessen Ausgang mit dem Rücksetzeingang der entsprechenden Zelle des ersten Statusregisters verbunden ist.

Die Erfindung wird im folgenden anhand der Figuren näher erläutert. Es zeigen :

Fig. 1 das Blockschaltbild einer Anordnung zur Durchführung des erfindungsgemäßen Verfahrens,

Fig. 2 ein Schaltbild einer Anordnung zur Durchführung des erfindungsgemäßen Verfahrens und

Fig. 3 ein Timing-Diagramm einer Anordnung nach Fig. 1 oder Fig. 2.

In den Figuren sind gleiche Elemente mit gleichen Bezugszeichen bezeichnet.

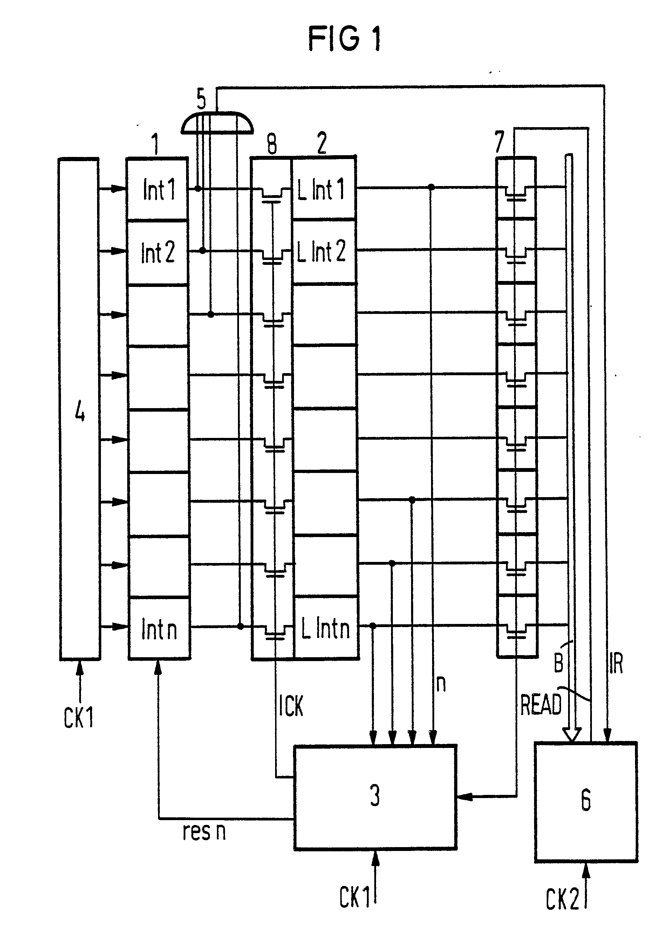

Das Blockschaltbild der Fig. 1 zeigt die Blockstruktur einer erfindungsgemäßen Anordnung, bei der als Steuersignale Interrupt-Ereignisse verwendet werden. Das erste Statusregister 1 weist n Speicherzellen Int 1 bis Int n auf und speichert die mit dem Takt CK 1 des ersten Systems 4, z. b. eines Controller-Bausteins, synchron einfallende Ereignisse, die einen Interrupt-Request IR an das zweite System 6, z. B. eine Zentraleinheit, zur Folge haben. Die in den einzelnen Zellen Int 1 bis Int n des ersten Statusregisters 1 gespeicherten Interrupt-Ereignisse bzw. Interrupt-Ursachen können z. B. die Bedeutungen « Datenbereit », « Übertragungsfehler », « Datenüberlauf » oder ähnliches haben. Der Interrupt-Request IR wird beispielsweise am Ausgang eines n-fachen NOR-Gliedes 5, dessen Eingänge mit je einem Ausgang einer Speicherzelle des ersten Statusregisters 1 verbunden sind, erzeugt.

Die einzelnen Ereignisse bleiben im ersten Statusregister 1 solange gespeichert, bis sie durch ein von der Überwachungslogik 3 erzeugtes Resetsignal res gelöscht werden.

Das als Übergabe-Speicher arbeitende zweite Statusregister 2 weist n Speicherzellen LInt 1 bis LInt n auf, wobei jede Speicherzelle des zweiten Statusregisters 2 eingangsseitig mit dem Ausgang der entsprechenden Speicherzelle des ersten Statusregisters 1 verbunden ist. Ausgangsseitig sind die einzelnen Speicherzellen des zweiten Statusregisters 2 in Abhängigkeit vom READ-Signal des zweiten Systems 6 an einen zu diesem führenden Bus B gekoppelt, so daß das zweite Statusregisters 2 synchron zum Takt CK 2 des zweiten Systems 6 gelesen wird. Das zweite Statusregisters 2 ist über Transfergates 8 solange mit dem ersten Statusregister 1 verkoppelt bis durch ein von der Überwachungslogik 3 abgegebenes Steuersignal ICK die beiden Statusregister getrennt werden.

Das Transfergate 8 ist als Timing-Schnittstelle zwischen dem ersten System 4 und dem zweiten System 6 anzusehen, da das zweite Statusregister 2 mit dem Takt CK1 des ersten Systems 4 « aufmacht » und mit dem Takt CK2 des zweiten Systems sperrt.

Die Überwachungslogik 3 ist so ausgeführt, daß sie die Verbindung zwischen dem ersten Statusregister 1 und dem zweiten Statusregister 2 während des Lesevorgangs, d. h. während des aktiven READ-Signals READ und während des darauf folgenden Taktes CK1 des ersten Systems 4 auftrennt, die vom zweiten Statusregister 2 auf den zum zweiten System 6 führenden Bus B ausgewiesenen Informationen überwacht und davon abhängig die einzelnen Speicherzellen im ersten Statusregister 1 löscht. Die Überwachungslogik 3 verhindert somit eine Löschung der einzelnen Zellen des ersten Statusregisters 1, solange die Informationen der einzelnen Speicherzellen des zweiten Statusregisters 2 noch nicht auf den Bus B ausgelesen sind, so daß der mittels der durch das Gatter 5 bewirkten Veroderung eine Zusammenfassung aller Speicher-Bits des ersten Statusregisters 1 darstellende Interrupt-Request IR solange bestehen bleibt, bis alle aufgetretenen und in den einzelnen Speicherzellen des ersten Statusregisters 1 gespeicherten Interrupt-Ereignisse sicher dem zweiten System 6, z. B. einem Mikroprozessor, übergeben sind. Das Unterschlagen einer Interrupt-Ursache aufgrund einer durch die Asynchronität der Takte CK 1 des ersten Systems 4 und CK 2 des zweiten Systems 6 bedingten sogenannten Race-Kondition (kritische Phasen- bzw. Zeitbeziehung) ist durch die Überwachung und den damit geschlossenen Regelkreis unmöglich.

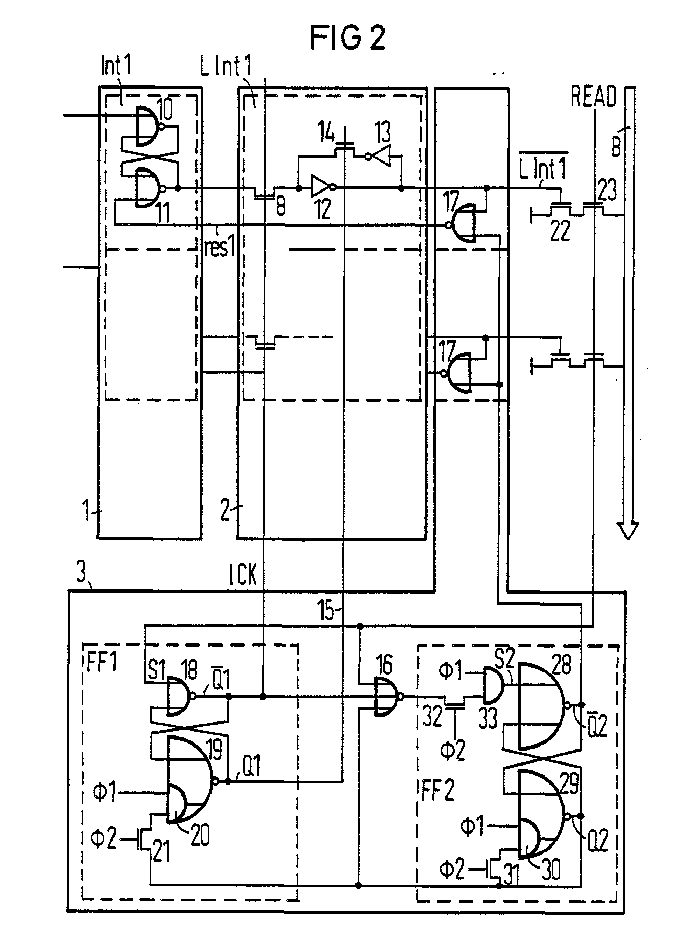

Die Fig. 2 zeigt ein Beispiel einer schaltungstechnischen Realisierung des ersten Statusregisters 1, des zweiten Statusregisters 2 und der Überwachungslogik 3 der Fig. 1, das vorteilhafterweise in MOS-Technologie, insbesondere NMOS-Technologie ausführbar ist. Das erste Statusregister 1 besteht aus n Speicherzellen Int 1 bis Int n. Jede Speicherzelle ist als RS-Flip-Flop, das in an sich bekannter Weise zwei rückgekoppelte NOR-Gatter 10 und 11 aufweist, ausgeführt. Aus Gründen der Übersichtlichkeit ist in der Fig 1 nur die erste der n Speicherzellen dargestellt. Der mit dem ersten System 4 verbundene Eingang der ersten Speicherzelle Int 1 ist identisch mit dem Setzeingang des RS-Flip-Flop, d. h. mit dem ersten Eingang des NOR-Gatters 10. der Rücksetzeingang (zweiter Eingang des NOR-Gatters 11) ist mit der von der Überwachungslogik 3 kommenden Rücksetzleitung R verbunden. Der Ausgang des NOR-Gatters 11 bildet gleichzeitig den Ausgang der Speicherzelle Int 1 des ersten Statusregisters 1.

Entsprechend dem ersten Statusregister 1 weist das zweite Statusregister 2 n Speicherzellen LInt 1 bis LInt n auf, von denen aus Gründen der Übersichtlichkeit nur die erste Speicherzelle LInt 1 in der Fig. 2 dargestellt ist. Die Speicherzellen des zweiten Statusregisters 2 werden vorteilhafterweise durch sogenannte transparente Latches realisiert, so daß bei geöffnetem Transfergate 3 das Ausgangssignal dem Eingangssignal ohne durch einen Takt hervorgerufene zeitliche Verzögerung entspricht. Zu diesem Zwecke können die Speicherzellen des zweiten Statusregisters 2 als D-Flip-Flop ausgeführt sein. Im Ausführungsbeispiel der Fig. 2 besteht eine Speicherzelle LInt 1 des zweiten Statusregisters 2 aus einem vom von der Überwachungslogik 3 abgegebenen Steuersignal ICK gesteuerten Transfergate 8 (dynamisch betrachtet verhält sich ein Transfergate wie ein D-Flip-Flop), das die am Eingang der Speicherzelle liegenden Signale zu einem Inverter 12 weiterführt, dessen Ausgang mit dem Ausgang der Speicherzelle LInt 1 identisch ist. Das Ausgangssignal $\overline{LInt\ 1}$ der Speicherzelle LInt 1 entspricht also dem invertierten Eingangssignal der Zelle LInt 1. Zu Refresh-Zwecken ist der Ausgang des Inverters 12 über einen weiteren Inverter 13 und ein weiteres Transfergate 14, das von einem von der Überwachungslogik 3 abgegebenen Signal 15 gesteuert wird, mit seinem Eingang verbunden.

Die Überwachungslogik 3 ist durch zwei Flip-Flops FF1 und FF2, einem Dreifach-NOR-Gate 16 und n Zweifach-NOR-Gates 17 realisiert. Das Flip-Flop FF1 besteht z. B. aus einem NOR-Gatter 18 und einem weiteren NOR-Gatter 19, wobei der erste Eingang (Setzeingang) S1 des NOR-Gatters 18 mit dem vom zweiten System 6 abgegebenen Read-Signal READ beaufschlagbar ist, der zweite Eingang des Gatters 18 mit dem Ausgang Q1 des Gatters 19 verbunden ist, und der erste Eingang des Gatters 19 vom Ausgang Q1 des Gatters 18 beaufschlagt wird. Der zweite Eingang (Rücksetzeingang) des NOR-Gatters 19 ist mit dem Ausgang eines UND-Gatters 20 verbunden, dessen einer Eingang vom Takt 01 und dessen zweiter Eingang über ein vom Takt 02 gesteuertes Transfergate 21 vom dritten Eingang des Dreifach-NOR-Gatters 16 und vom Flip-Flop FF2 beaufschlagt ist.

Der zweite Eingang des Gatters 16 ist mit dem Ausgang Q1 des Gatters 18, dem auch das Signal ICK zu entnehmen ist, verbunden, während der erste Eingang des Gatters 16 vom Read-Signal READ beaufschlagt ist. Dem Ausgang Q1 des Gatters 19 des Flip-Flops FF1 ist das Refresh-Signal 15 zu entnehmen.

Das zweite Flip-Flop FF2 weist zwei NOR-Gatter 28 und 29 auf, die entsprechend in beiden NOR-Gattern 18 und 19 des ersten Flip-Flops FF1 rückgekoppelt sind. Der erste Eingang (Setzeingang) S2 des Gatters 28 ist mit dem Ausgang eines UND-Gatters 33, dessen einer Eingang vom Takt 01 beaufschlagt wird und dessen zweiter Eingang über ein vom Takt 02 gesteuertes Transfergate 32 mit dem Ausgang des Dreifach-NOR-Gatters 16 verbunden ist, verbunden. Der zweite Eingang (Rücksetzeingang) des Gatters 29 ist mit dem Ausgang eines UND-Gatters 30 verbunden, dessen erster Eingang vom Takt 01 beaufschlagt wird und dessen zweiter Eingang über ein vom Takt 02 gesteuertes Transfergate 31 mit dem Ausgang Q2 des Gatters 29 und über das Transfergate 21 mit einem Eingang des UND-Gatters 20 des ersten Flip-Flops FF1 verbunden ist.

Der Ausgang Q1 des Gatters 28 des zweiten Flip-Flops FF2 ist jeweils mit einem Eingang der n Zweifach-NOR-Gatter 17, deren anderer Eingang mit dem Ausgang der zum entsprechenden Gatter 17 gehörenden Speicherzelle des zweiten Statusregisters 2 verbunden ist, verbunden. Dem Ausgang der Gatter 17 ist das Reset-Signal R entnehmbar, das dem Rücksetzeingang der entsprechenden Speicherzelle des ersten Statusregisters 1 zugeführt wird. Die Takte 01 und 02 werden als nicht überlappende Takte in in der MOS-Technik üblicher Weise aus dem Takt CK 1 des ersten Systems 4 abgeleitet (vergl. z. B. C. Mead und L. Conway, Introduction to VLSI Systems, Addison-Wesley, 1980, Seiten 229 bis 233).

Der Ausgang der Speicherzellen des zweiten Statusregisters 2 kann in der Weise mit dem Bus B des zweiten Systems 6 verbunden sein, daß er ein Transfergate 22 steuert, das einerseits mit Masse und andererseits mit einem, mit dem Bus B verbundenen Transfergate 23 verbunden ist, das vom READ-Signal READ des zweiten Systems 6 gesteuert wird.

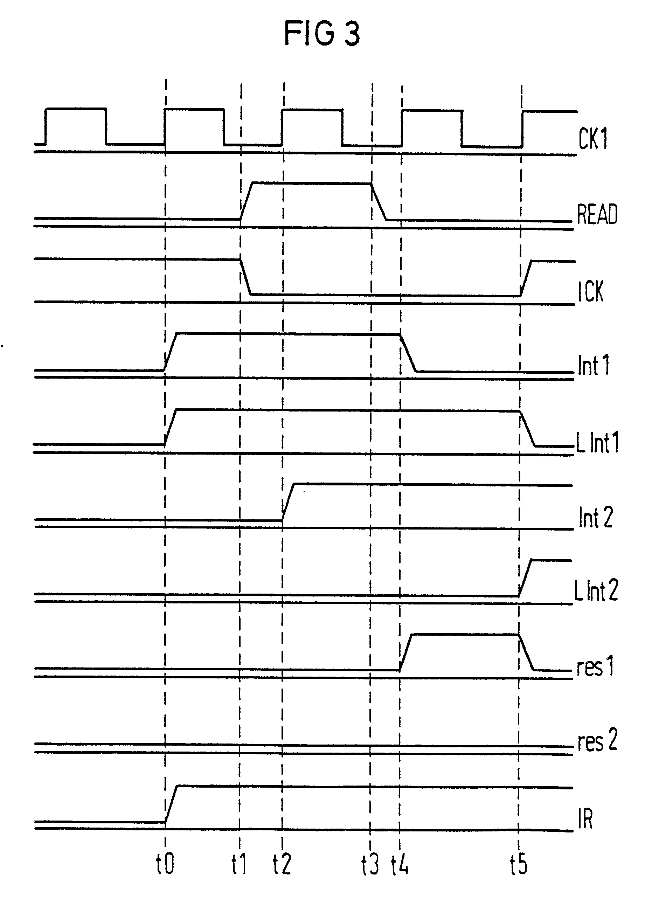

Die Funktion des Ausführungsbeispiels der Fig. 2 wird anhand des in der Fig. 3 gezeigten Timing-Diagramms verdeutlicht : Zum Ausgangszeitpunkt t0 tritt synchron zum Takt CK 1 des ersten Systems 4 ein Interrupt-Ereignis (Int 1) auf. Da im Ausgangszustand das erste Flip-Flop FF1 und das zweite Flip-Flop FF2 rückgesetzt sind, ist das Steuersignal ICK aktiv, so daß erstes Statusregister 1 und zweites Statusregister 2 miteinander verbunden sind. Zum Zeitpunkt t0 wird also das Interrup-Ereignis in der Speicherzelle Int 1 des ersten Statusregisters 1 und der Speicherzelle LInt 1 des zweiten Statusregisters 2 gespeichert. Synchron zum Takt CK 2 greift das zweite System 6, z. B. ein Mikroprozessor, mit einem Read-Befehl READ zum Zeitpunkt t1 auf das zweite Statusregister 2 und die Zelle LInt 1 zu. Das erste Flip-Flop FF1 wird gesetzt, die Statusregister 1 und 2 werden getrennt. Der Inhalt der Speicherzelle LInt 1 des zweiten Statusregisters 2 wird auf den Bus B ausgelesen. Nach Ende des Read-Signals READ (Zeitpunkt t3) wird das zweite Flip-Flop FF2 synchron zum Takt CK 1 gesetzt (Zeitpunkt t4) und bleibt dies eine Periode des Taktes CK 1 lang (bis zum Zeitpunkt t5). Das Ausgangssignal $\overline{Q2}$ des Gatters 28 entspricht daher dem invertierten Signal des Signals res 1. Mit der Positivflanke des Signals READ werden die beiden Statusregister 1 und 2 also bis zu der mit dem Takt CK 1 eingephasten bzw. synchronisierten Negativflanke vom Signal READ getrennt (t1 bis t5).

Durch die mittels der Gatter 17 durchgeführte NOR-Verknüpfung der auf den Bus B ausgelesenen Informationen mit einem während der Zeit t4 bis t5 aktiven, dem Ausgang des Gatters 28 des zweiten Flip-Flops FF2 entnommenen Timing-Reset-Signals $\overline{Q2}$ ($\overline{Q2}$ entspricht $\overline{res\ 1}$) wird die

ausgelesene Information LInt 1 überwacht und abhängig davon das entsprechende Status-Flip-Flop Int 1 im ersten Statusregister 1 mit dem Resetsignal res 1 individuell rückgesetzt. Nach dem Zeitpunkt t5 können die soeben rückgesetzten Flip-Flops FF1 und FF2 wieder gesetzt werden, die Statusregister 1 und 2 werden verbunden und der Ausgangszustand ist wieder erreicht. Das Signal res n ist also nur dann aktiv, wenn in der Speicherzelle LInt n ein Interrupt-Ereignis gespeichert war und ein Read-Signal READ aufgetreten und beendet ist. Dabei wird das Signal res n mit dem Takt CK 1 des ersten Systems eingephast.

Der wesentliche Vorteil dieser Lösung besteht darin, daß sequentiell auftretende Interrupt-Ereignisse individuell so lange gespeichert bleiben, bis sie vom zweiten System 6 ausgewertet sind. Dies ist auch für den Fall gesichert, daß die Interrupt-Ereignisse in die Zeitspanne fallen, in der zeitlich vorausgehende Interrupt-Ereignisse ausgelesen werden (Zeitpunkt t0 bis t5). Fällt z. B. in den Zeitbereich t0 bis t5 ein weiteres Interrupt-Ereignis (Zeitpunkt t2), so wird es z. B. im Speicher Int 2 des ersten Statusregisters 2 gespeichert, aber erst nach Abschluß der Auswertung des vorhergegangenen Interrupt-Ereignisses in den Speicher LInt 2 des zweiten Statusregisters 2 übernommen (Zeitpunkt t5), ein Rücksetzen der Speicherzelle Int 2 des ersten Statusregisters 1 erfolgt nicht (Rücksetzsignal res 2).

Das erfindungsgemäße Verfahren ist auch für Übergabe von Steuersignalen an Schnittstellen synchroner digitaler Systeme anwendbar.

**Patentansprüche**

1. Verfahren zur überwachten Übergabe von Steuersignalen an Schnittstellen digitaler Systeme, bei dem ein erstes System (4) Informationen, die ein Anforderungssignal bewirken, in einem ersten Statusregister (1) speichert, bei dem das Anforderungssignal über eine Anforderungsleitung (IR) an ein zweites System (6) übergeben wird, bei dem dann der Inhalt eines zweiten Statusregisters (2), dessen Eingänge mit den Ausgängen des ersten Statusregisters (1) über steuerbare Verbindungsglieder (8) verbindbar sind, in das zweite System (6) mit Hilfe eines von diesem abgegebenen Lesesignals (READ) ausgelesen und während des Auslesevorgangs die Verbindung zwischen erstem (1) und zweitem Statusregister (2) unterbrochen wird und bei dem das erste Statusregister (1) rückgesetzt wird, dadurch gekennzeichnet, daß das erste Statusregister (1) mit dem Takt des ersten Systems (4) synchronisiert ist, der asynchron zum Takt des zweiten Systems (6) verläuft, daß das Anforderungssignal vom Inhalt des ersten Statusregisters (1) direkt abgeleitet wird und daß mit Hilfe einer Überwachungslogik (3) die Verbindung zwischen erstem (1) und zweitem Statusregister (2) vom Beginn des Lesesignals (READ) bis zum Ende des darauffolgenden Taktes des ersten Systems (4) getrennt, das Auslesen des zweiten Statusregisters (2) durch das zweite System (6) überwacht wird und nach dem Auslesen des zweiten Statusregisters (2) die Zellen des ersten Statusregisters (1) rückgesetzt werden.

2. Anordnung zur Durchführung des Verfahrens nach Anspruch 1 mit einem ersten Statusregister (1), in dessen Zellen die vom ersten System (4) kommenden, das Anforderungssignal bewirkenden Informationen speicherbar sind und einem zweiten Statusregister (2), dessen Eingänge mit den Ausgängen des ersten Statusregisters (1) über steuerbare Verbindungsglieder (8) verbindbar sind und dessen Ausgänge bei Vorliegen eines vom zweiten System (6) abgegebenen Lesesignals (READ) mit dem zweiten System (6) verbindbar sind, dadurch gekennzeichnet, daß die Anforderungsleitung (IR) mit den Ausgängen des ersten, mit dem Takt des ersten Systems (4) synchronisierten Statusregisters (1) verbunden ist und eine Überwachungslogik (3) vorgesehen ist, die die Verbindung zwischen erstem (1) und zweitem Statusregister (2) vom Beginn des Lesesignals (READ) bis zum Ende des darauffolgenden Taktes des ersten Systems (4) trennt, die überwacht, ob der Inhalt des zweiten Statusregisters (2) durch das zweite System (6), dessen Takt gegenüber dem ersten System (4) asynchron verläuft, ausgelesen ist und die Zellen des ersten Statusregisters (1) rücksetzt, wenn der Inhalt des zweiten Statusregisters (2) ausgelesen ist.

3. Anordnung nach Anspruch 2, dadurch gekennzeichnet, daß das erste Statusregister (1) aus n RS-Flip-Flops (10, 11) aufgebaut ist.

4. Anordnung nach Anspruch 2 oder 3, dadurch gekennzeichnet, daß das zweite Statusregister (2) aus n D-Flip-Flops (8, 12) aufgebaut ist, die eingangsseitig während der Aktivphase eines aus der Überwachungslogik (3) übernommenen Übernahmesignals (ICK) mit den Ausgängen des ersten Statusregisters (1) verbindbar sind.

5. Anordnung nach Anspruch 4, dadurch gekennzeichnet, daß die Überwachungslogik (3) ein erstes, vom Takt des ersten Systems (CK 1) getaktetes Flip-Flop (FF1) aufweist, dessen Setzeingang (S1) vom Lesesignal (READ) des zweiten Systems (6) beaufschlagbar ist, und an dessen erstem Ausgang (Q1) das Übernahmesignal (ICK) entnehmbar ist.

6. Anordnung nach Anspruch 5, dadurch gekennzeichnet, daß die Überwachungslogik (3) ein vom Tackt (CK1) des ersten Systems (4) getaktetes zweites Flip-Flop (FF2) aufweist, dessen Setzeingang (S2) mit dem Ausgang eines Dreifach-NOR-Gatters (16), dessen Eingänge mit dem Setzeingang des ersten Flip-Flops (FF1), dem ersten Ausgang (Q1) des ersten Flip-Flops (FF1) und dem zweiten Ausgang (Q2) des zweiten Flip-Flops (FF2) verbunden sind, verbunden ist und dessen erstem Ausgang (Q2) ein Rücksetzimpuls entnehmbar ist.

7. Anordnung nach Anspruch 6, dadurch gekennzeichnet, daß die Überwachungslogik (3) für jede der n Zellen des ersten Statusregisters (1) ein Zweifach-NOR-Gatter (17) aufweist, dessen erster Eingang mit dem Rücksetzimpuls beaufschlagt ist, dessen zweiter Eingang mit dem Ausgang der entsprechenden Zelle des zweiten Statusregisters (2) verbunden ist und dessen Ausgang mit dem Rücksetzeingang (res) der entsprechenden Zelle des ersten Statusregisters (1) verbunden ist.

**Claims**

1. A method for the monitored transmission of control signals to interfaces of digital systems, wherein a first system (4) stores information items, which result in a request signal, in a first status register (1), wherein the request signal is transferred via a request line (IR) to a second system (6), wherein the content of a second status register (2), whose inputs can be connected to the outputs of the first status register (1) via controllable connecting elements (8), is then read out into the second system (6) by means of a read signal (READ) emitted by the latter, and during the read-out process the connection between the first status register (1) and the second status register (2) is interrupted, and wherein the first status register (1) is reset, characterised in that the first status register (1) is synchronised with the clock signal of the first system (4) which occurs asynchronously to the clock signal of the second system (6), that the request signal is directly derived from the content of the first status register (1) and that by means of a monitoring logic unit (3) the connection between the first status register (1) and the second status register (2) is cut off from the start of the read signal (READ) until the end of the following clock signal of the first system (4), the read-out of the second status register (2) is monitored by the second system (6), and following the read-out of the second status register (2) the cells of the first status register (1) are reset.

2. An arrangement for implementing the method claimed in claim 1, comprising a first status register (1), in the cells of which the information items which emanate from the first system (4) and result in the request signal can be stored, and with a second status register (2) whose inputs can be connected to the outputs of the first status register (1) via controllable connecting elements (8) and whose outputs can be connected to the second system (6) on the occurrence of a read signal (READ) emitted from the second system (6), characterised in that the request line (IR) is connected to the outputs of the first status register, which is synchronised with the clock signal of the first system (4), and a monitoring logic unit (3) is provided which cuts off the connection between the first status register (1) and the second status register (2) from the start of the read signal (READ) until the end of the following clock signal of the first system (4), which monitors whether the content of the first status register (2) has been read-out by the second system (6), whose clock signal is asynchronous to that of the first system (4), and resets the cells of the first status register (1) when the content of the second status register (2) has been read out.

3. An arrangement as claimed in claim 2, characterised in that the first status register (1) is constructed from n RS-flip-flops (10, 11).

4. An arrangement as claimed in claim 2 or 3, characterised in that the second status register (2) is constructed from n D-flip-flops (8, 12) which at their input can be connected to the outputs of the first status register (1) during the active phase of a transfer signal (ICK) transferred from the monitoring logic unit (3).

5. An arrangement as claimed in claim 4, characterised in that the monitoring logic unit (3) comprises a first flip-flop (FF1) which is clock-controlled by the clock signal of the first system (CK 1) and whose setting input (S 1) can be supplied with the read signal (READ) of the second system (6) and from whose first output (Q1) the transfer signal (ICK) can be obtained.

6. An arrangement as claimed in claim 5, characterised in that the monitoring logic unit (3) comprises a second flip-flop (FF2) which is clock-controlled by the clock signal (CK1) of the first system (4) and whose setting input (S2) is connected to the output of a triple-NOR-gate (16) — whose inputs are connected to the setting input of the first flip-flop (FF1), to the first output (Q1) of the first flip-flop (FF1) and the second output (Q2) of the second flip-flop (FF2) — and from whose first output (Q2) a reset pulse can be obtained.

7. An arrangement as claimed in claim 6, characterised in that for each of the n cells of the first status register (1) the monitoring logic unit (3) possesses a double-NOR-gate (17) whose first input is supplied with the reset pulse, whose second input is connected to the output of the corresponding cell of the second status register (2), and whose output is connected to the reset input (res) of the corresponding cell of the first status register (1).

**Revendications**

1. Procédé pour transmettre, de façon contrôlée, des signaux de commande à des interfaces de systèmes numériques, selon lequel un premier système (4) mémorise les informations, qui déclenchent un signal de demande, dans un premier registre d'états, le signal de demande est transmis par l'intermédiaire d'une ligne (IR) de transmission de demandes à un second système (6), puis le contenu d'un second registre d'états (2), dont les entrées peuvent être raccordées aux sorties du premier registre d'états (1), par l'intermédiaire d'organes de liaison commandables (8), est lu dans le second système (6) à l'aide d'un signal de lecture (READ) délivré par ce système, et la liaison entre le premier registre d'états (1) et le second registre d'états (2) est interrompue pendant l'opération de lecture, et le premier registre d'états (1) est ramené à l'état initial, caractérisé par le fait que le premier registre d'états (1) est synchronisé avec la cadence du premier système (4), qui est asynchrone par rapport à la cadence du second système (6), le signal de demande est dérivé directement du contenu du premier registre d'états (1) et que la liaison entre le premier registre d'états (1) et le second registre d'états (2) est interrompue à l'aide d'un circuit logique de contrôle (3) depuis le début du signal de lecture (READ) jusqu'à la fin de l'impulsion de cadence suivante du premier système (4), la lecture du second registre d'états (2) est contrôlée par le second système (6) et, après la lecture du second registre d'états (2), les cellules du premier registre d'états (1) sont ramenées à l'état initial.

2. Dispositif pour la mise en œuvre du procédé selon la revendication 1, comportant un premier registre d'états (1), dans les cellules duquel les informations arrivant du premier système (4) et déclenchant le signal de demande, peuvent être mémorisées, et un second registre d'états (2), dont les entrées peuvent être reliées aux sorties du premier registre d'états (1) par l'intermédiaire d'organes de liaison commandables (8) dont les sorties peuvent être reliées au second système (6), dans le cas de la présence d'un signal de lecture (READ) délivré par le second système (6), caractérisé par le fait que la ligne (IR) de transmission de demandes est reliée aux sorties du premier registre d'états (1) synchronisé avec la cadence du premier système (4), et qu'il est prévu un circuit logique de contrôle (3) qui interrompt la liaison entre le premier registre d'états (1) et le second registre d'états (2), depuis le début du signal de lecture (READ) jusqu'à la fin de l'impulsion de cadence suivante du premier système (4) et qui contrôle si le contenu du second registre d'états (2) est lu par le second système (6), dont la cadence est asynchrone par rapport à celle du premier système (4), et ramène à l'état initial les cellules du premier registre d'états (1), lorsque le contenu du second registre d'états (2) est lu.

3. Dispositif suivant la revendication 2, caractérisé par le fait que le premier registre d'états (1) est constitué par n bascules bistables de type RS (10, 11).

4. Dispositif suivant la revendication 2 ou 3, caractérisé par le fait que le second registre d'états (2) est constitué par n bascules bistables D (8, 12), qui peuvent être reliées, côté entrée, aux sorties du premier registre d'états (1), pendant la phase active d'un signal de transfert (ICK) transféré depuis le circuit logique de contrôle (3).

5. Dispositif suivant la revendication 4, caractérisé par le fait que le circuit logique de contrôle (3) comporte une première bascule bistable (FF1), qui est commandée de façon cadencée par la cadence du premier système (CK1) et dont l'entrée de positionnement (S 1) peut être chargée par le signal de lecture (READ) du second système (6), et sur la première entrée (Q1) de laquelle le signal de transfert (ICK) peut être prélevé.

6. Dispositif suivant la revendication 5, caractérisé par le fait que le circuit logique de contrôle (3) comporte une seconde bascule bistable (FF2) qui est commandée de façon cadencée sur la cadence (CK1) du premier système (4) et dont l'entrée de positionnement (S2) est reliée à la sortie d'une porte NON-OU triple (16), dont les entrées sont raccordées à l'entrée de positionnement de la première bascule bistable (FF1), à la première sortie (Q1) de la première bascule bistable (FF1) et à la seconde sortie (Q2) de la seconde bascule bistable (FF2), et sur la première sortie (Q2) de laquelle une impulsion de remise à l'état initial peut être prélevée.

7. Dispositif selon la revendication 6, caractérisé en ce que le circuit logique de contrôle (3) comporte, pour chacune des n cellules du premier registre d'états (1), une porte NON-OU double (17), dont la première entrée est chargée par l'impulsion de remise à l'état initial, dont la seconde entrée est reliée à la sortie de la cellule correspondante du second registre d'états (2) et dont la sortie est reliée à l'entrée de remise à l'état initial (res) de la cellule correspondante du premier registre d'états (1).

FIG 1

# FIG 2

# FIG 3